# EUROPÄISCHE PATENTSCHRIFT

(11) **EP 1 728 915 B1**
(45) Veröffentlichungstag und Bekanntmachung des Hinweises auf die Patenterteilung: **16.12.2009**
(21) Anmeldenummer: 06114616.3
(22) Anmeldetag: 29.05.2006
(51) Int. Cl.: D07B 1/22, D07B 1/16

(54) **Tragmittel mit formschlüssiger Verbindung zum Verbinden mehrerer Seile**
Carrier means with an interlocking connection for connecting several cables
Elément porteur avec une liaison de forme pour coupler plusieurs câbles

(30) Priorität: 02.06.2005 EP 05104787
(43) Veröffentlichungstag der Anmeldung: 06.12.2006
(73) Patentinhaber: Inventio AG, 6052 Hergiswil (CH)
(72) Erfinder: Weinberger, Karl, 6405 Immensee (CH)
(74) Vertreter: Gaussmann, Andreas

(56) Entgegenhaltungen:
- EP-A- 1 416 082
- DE-A1- 3 304 527
- DE-A1- 10 354 855
- DE-U- 7 537 919
- US-A- 5 573 852

## Beschreibung

Die Erfindung betrifft ein Tragmittel zur Verwendung in einer Aufzugsanlage mit mehreren in einem Abstand zueinander verlaufenden Seilen und einem Seilmantel nach dem Oberbegriff des Patentanspruchs 1.

Laufende Seile sind in der Fördertechnik, insbesondere bei Aufzügen, im Kranbau und im Bergbau, ein wichtiges, stark beanspruchtes Maschinenelement. Besonders vielschichtig ist die Beanspruchung von getriebenen Seilen, wie sie beispielsweise im Aufzugsbau verwendet werden.

Bei herkömmlichen Aufzugsanlagen sind Aufzugskabine und Gegengewicht über mehrere Stahllitzenseile miteinander verbunden. Die Seile laufen über eine Treibscheibe, die von einem Antriebsmotor angetrieben ist. Das Antriebsmoment wird unter Reibschluss dem jeweils über den Umschlingungswinkel auf der Treibscheibe aufliegenden Seilabschnitt aufgeprägt. Dabei erfahren die Seile Zug-, Biege-, Druck- und Torsionsspannungen. Die durch die Biegung über die Seilscheibe entstehenden Relativbewegungen verursachen innerhalb des Seilgefüges Reibung, die sich auf den Seilverschleiss negativ auswirken können. Je nach Seilkonstruktion, Biegeradius, Rillenprofil und Seilsicherheitsfaktor haben die entstehenden Primär- und Sekundärspannungen negativen Einfluss auf den Seilzustand.

Neben den Festigkeitsanforderungen besteht bei Aufzugsanlagen aus energetischen Gründen ferner die Forderung nach möglichst kleinen Massen. Hochfeste Kunstfaserseile, beispielsweise aus aromatischen Polyamiden, insbesondere Aramiden, erfüllen diese Anforderungen besser als Stahlseile.

Aus Aramidfasern aufgebaute Seile weisen bei gleichem Querschnitt und gleicher Tragfähigkeit im Vergleich zu herkömmlichen Stahlseilen nur ein Viertel bis Fünftel des spezifischen Seilgewichts auf. Im Gegensatz zu Stahl hat die Aramidfaser jedoch eine wesentlich geringere Querfestigkeit in Relation zur Längstragfähigkeit.

Um die Aramidfasern folglich beim Lauf über die Treibscheibe möglichst geringen Querspannungen auszusetzen, wird beispielsweise in der EP 0 672 781 A1 ein als Treibseil geeignetes parallel gedrehtes Aramidfaserlitzenseil vorgeschlagen. Das daraus bekannte Aramidseil bietet hinsichtlich Lebensdauer, hoher Abriebfestigkeit und Biegewechselfestigkeit sehr zufriedenstellende Werte; allerdings besteht bei ungünstigen Umständen die Möglichkeit, dass bei parallel verseilten Aramidseilen partielle Seilaufdrehungserscheinungen auftreten, die das ursprüngliche Seilgefüge nachhaltig in ihrer Balance stören. Diese Verdrehungserscheinungen und die Veränderungen des Seilgefüges können zum Beispiel mit einem Kunstfaserseil gemäss der Europäischen Patentanmeldung EP 1 061 172 A2 vermieden werden. Zu diesem Zweck umfasst das Kunstfaserseil zwei parallel verlaufenden Seile, die über einen Seilmantel miteinander verbunden sind. Das Kunstfaserseil gemäss EP 1 061 172 A2 erzielt eine Längsfestigkeit im Wesentlichen durch die Eigenschaften der beiden parallel verlaufenden Seile. Der Seilmantel hingegen verhindert Verdrehungserscheinungen und Veränderungen des Seilgefüges. Ausserdem dient der Seilmantel als Isolation (Schutzwirkung) und er weist einen hohen Reibwert auf.

Eine Schwachstelle kann je nach Anwendungs- und Einsatzgebiet der Steg eines solchen Kunstfaserseiles gemäss EP 1 061 172 A2 sein.

Aus DE 33 04 527 ist ein flexibles Trag-, Zurr- oder Haltezeug bekannt, bestehend aus zwei Seilen, die eine Zugbelastung aufnehmen, sowie ein Schutzelement zum Schutz der Oberfläche des Seils. Dieses Schutzelement ist einteilig aus einem elastischen Werkstoff gefertigt und kann nachträglich an verletzungsbedrohte Stellen der Seile in einer Weise angesetzt werden, die einen sicheren Halt am Träger gewährleistet.

Die Tragmittel mit zwei und mehr Seilen haben Nachteile, falls sie beim Umlaufen um eine Treibscheibe so bewegt werden, dass die einzelnen Seile auf Bahnen mit unterschiedlichem Radius laufen. Wegen der Radiusunterschiede werden die Seile durch die Traktion an der Treibscheibe unterschiedlich schnell bewegt. Der Stegteil des Seilmantels wird dadurch einer Scherspannung ausgesetzt. Durch die Scherwirkung kann der Stegbereich des Seilmantels beschädigt werden, vor allem wenn es sich um dynamisch auftretende Scherkräfte handelt.

Die Erfindung verfolgt das Ziel, die bekannten Tragmittel, die zwei oder mehr Seile umfassen, weiter zu verbessern, um unter anderem einen Stegbruch zu vermeiden. Dies gilt insbesondere für Tragmittel, die Kunstfaserseile umfassen.

Die Erfindung basiert auf der Erkenntnis, dass die genannten Probleme nicht in den Griff zu bekommen sind, in dem man den Stegbereich versteift. So können zwar die unmittelbaren Auswirkungen der Scherkräfte verhindert werden, aber in diesem Fall reisst das schneller umlaufende Seil das andere Seil mit und es kommt zu Schlupf, der verstärkten Abrieb verursacht.

Dieses Ziel wird erfindungsgemäss durch ein Tragmittel mit den im Patentanspruch 1 angegebenen Merkmalen erreicht. Die abhängigen Ansprüche enthalten zweckmässige und vorteilhafte Weiterbildungen und/oder Ausführungen der durch die Merkmale des Anspruchs 1 gegebenen Erfindung.

Die Erfindung ist im Folgenden anhand in den Zeichnungen dargestellter Ausführungsbeispiele ausführlich beschrieben. Es zeigt:
- Fig. 1A: eine schematische Schnittansicht eines ersten erfindungsgemässen Tragmittels mit zwei Seilen;
- Fig. 1B: eine perspektivische Darstellung des Tragmittels nach Fig. 1A;
- Fig. 2A: eine schematische Schnittansicht eines zweiten erfindungsgemässen Tragmittels mit drei Seilen;
- Fig. 2B: eine perspektivische Darstellung des Tragmittels nach Fig. 2A.

Gleiche, beziehungsweise gleich wirkende, konstruktive Elemente sind in allen Figuren mit gleichen Bezugszeichen versehen, auch wenn sie in Einzelheiten nicht gleich ausgeführt sind. Die Figuren sind nicht massstäblich.

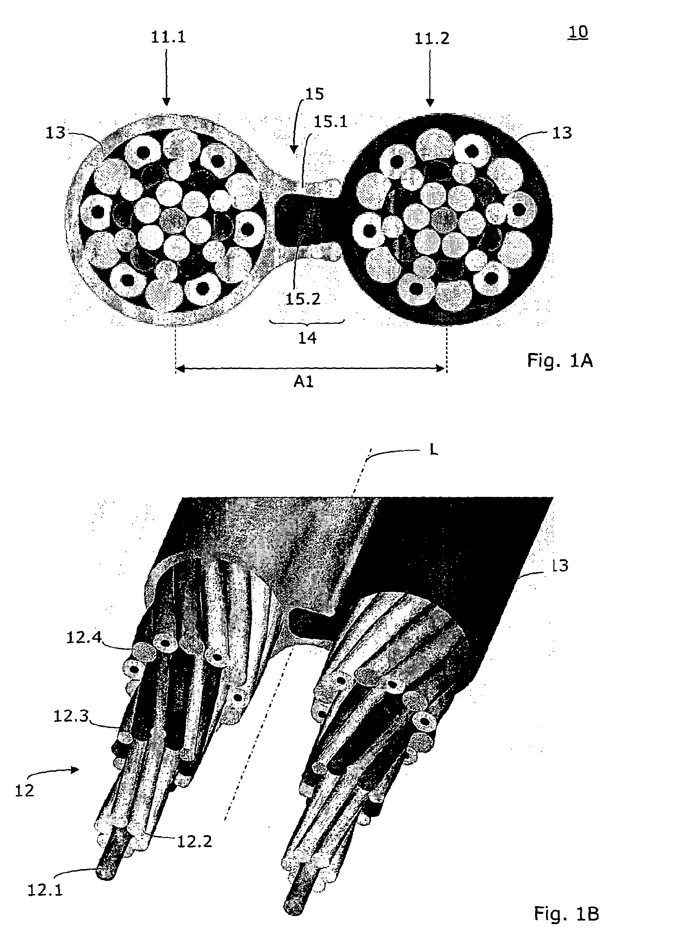

Ein erstes Tragmittel 10 zur Verwendung in einer Aufzugsanlage ist in Fig. 1A und Fig. 1B gezeigt. Das Tragmittel 10 umfasst mindestens zwei Seile 11.1 und 11.2. Diese Seile 11.1 und 11.2 umfassen zum Beispiel Kunstfaserlitzen 12, die zur Kraftaufnahme in Längsrichtung L ausgelegt sind. Die Seile 11.1 und 11.2 sind entlang der Längsrichtung L des Tragmittels 10 mit einem Abstand A1 (Mitte-Mitte) parallel zueinander angeordnet. Durch einen Seilmantel 13 mit einem Stegbereich 14 sind die Seile 11.1, 11.2 verdrehfest gegeneinander fixiert. Der Seilmantel 13 bildet einen parallel zu der Längsrichtung L des Tragmittels 10 verlaufenden Übergangsbereich zwischen den beiden Seilen, der als Steg oder Stegbereich 14 bezeichnet wird.

Gemäss Erfindung sind im Bereich des Stegs 14 Verbindungsmittel 15 vorgesehen. Diese Verbindungsmittel 15 sind so ausgelegt sind, dass sie eine geführte Relativbewegung der Seile 11.1, 11.2 zueinander in Längsrichtung L ermöglichen.

Anhand der Figuren 1A und 1B ist zu erkennen wie diese Verbindungsmittel 15 im Fall der ersten Ausführungsform ausgelegt sind. Der Seilmantel 13 des ersten Seils 11.1 weist eine Art Längsnut 15.1 auf, die sich parallel zur Längsrichtung L des Tragmittels 10 erstreckt. Am Seilmantel 13 des zweiten Seils 11.2 ist ein entsprechendes Gegenstück 15.2 vorgesehen, das in die Längsnut 15.1 eingreift. Eine solche Verbindung kann zum Beispiel als Feder-Nut Verbindung bezeichnet werden, wobei das Gegenstück 15.2 als Feder und die Längsnut 15.1 als Nut dient.

In Fig. 1B ist in der perspektivischen Darstellung zu erkennen wie die Seilmäntel 13 der beiden Seile 11.1, 11.2 durch das Verbindungsmittel 15 miteinander verbunden sind. Dabei sind die Verbindungsmittel 15 so ausgelegt, dass eine Relativverschiebung parallel zur Längsrichtung L der beiden Seile 11.1, 11.2 gegeneinander möglich ist.

Gemäss der Erfindung sind also mindestens zwei Seile miteinander verbunden, aber nicht durch eine starre Verbindung. Die Verbindung zwischen benachbarten Seilen 11.1, 11.2 des erfindungsgemässen Tragmittels 10 wird über formschlüssig zusammenfügbare, mit jeweils einem der benachbarten Seile verbundene Verbindungselemente 15.1, 15.2 geschaffen, die einerseits eine Übertragung von Torsionsmomenten von einem Seil 11.1 auf das benachbarte Seil 11.2 ermöglichen, andererseits aber in der Längsrichtung L des Tragmittels 10 eine Verschiebung der Seile 11.1, 11.2 relativ zueinander ermöglichen.

Wichtig ist, dass die Verbindungsmittel 15 ein Führungselement 15.1 und ein entsprechendes Gegenstück 15.2 umfassen, das eine geführte Relativbewegung der Seile 11.1, 11.2, 11.3 zueinander in Längsrichtung (L) ermöglicht.

Vorzugsweise sind die Verbindungsmittel 15 so ausgelegt, dass es zu keiner Deformation der Verbindungselemente 15 durch eine Scherbewegung in Längsrichtung L kommt. Dies kann erreicht werden in dem die Reibung zwischen den sich berührenden Verbindungselementen 15.1, 15.2 so gering ist, dass sie mindestens in gewissen Längenabschnitten aneinander vorbei gleiten können.

Der Begriff Relativverschiebung der benachbarten Seile schliesst gemäss Erfindung zwei Fälle ein:
(1) die beiden Seile 11.1, 11.2 können auf ihrer gesamten Länge gleichmässig gegeneinander verschoben werden (bei gleicher Dehnung der Seile),
(2) eines der Seile 11.1 oder 11.2 kann stärker gedehnt werden als das andere, wobei es während der Dehnung zu relativen Verschiebungen zwischen einzelnen Längsabschnitten der jeweiligen Seile kommt (die Grösse der relativen Verschiebung hängt dabei von der Längsposition auf dem Seil ab).

Gemäss Erfindung wird die Verbindung zwischen benachbarten Seilen 11.1, 11.2 somit nicht durch eine Scherspannung belastet oder gar deformiert.

Das beschriebene Prinzip lässt sich auf ein Ensemble von drei und mehr Seilen übertragen.

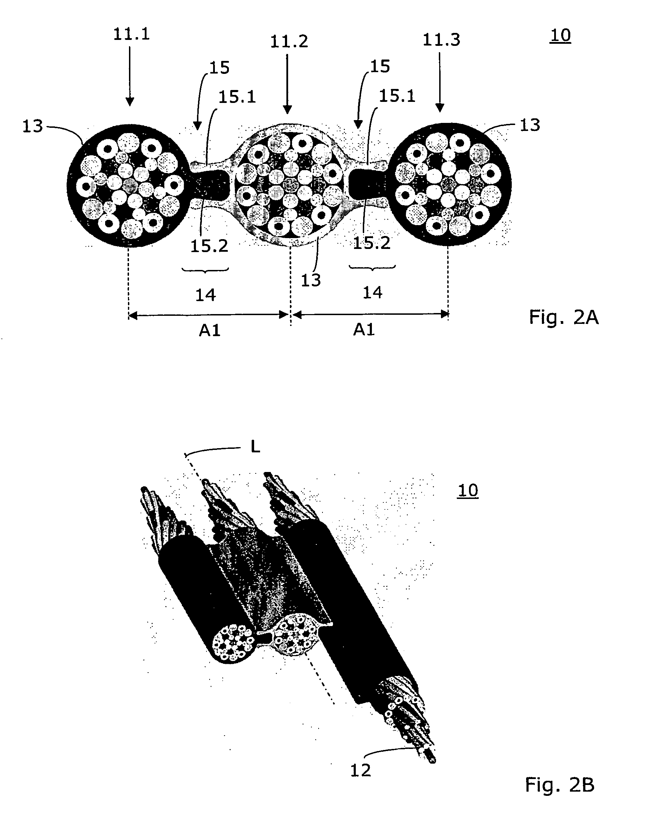

In den Figuren 2A und 2B ist ein erfindungsgemässes Tragmittel 10 mit drei Seilen 11.1 - 11.3 gezeigt. Das Tragmittel 10 ist, wie auch das in den Figuren 1A, 1B gezeigte Tragmittel 10 zur Verwendung in einer Aufzugsanlage ausgelegt. Das Tragmittel 10 umfasst drei Seile 11.1, 11.2, 11.3, wobei jedes der drei Seile 11.1, 11.2, 11.3 mehrere Litzen 12 umfasst. Die Seile 11.1, 11.2, 11.3 sind zur Kraftaufnahme in Längsrichtung L ausgelegt, wobei die Seile 11.1, 11.2, 11.3 entlang der Längsrichtung L des Tragmittels 10 mit einem Abstand A1 zueinander angeordnet und mittels eines Seilmantels 13 verbunden sind. Der Seilmantel 13 bildet einen Stegbereich 14 zwischen jeweils zwei Seilen 11.1, 11.2 und 11.2, 11.3. Im Bereich der Stege 14 sind wiederum Verbindungsmittel 15 vorgesehen. Die Verbindungsmittel 15 sind so ausgelegt sind, dass sie eine geführte Relativbewegung der Seile 11.1 in Bezug auf Seil 11.2, und Seil 11.2 in Bezug auf Seil 11.3 in Längsrichtung L ermöglichen.

Anhand von den Figuren 2A und 2B ist zu erkennen, dass die beiden äusseren Seile 11.1 und 11.3 je einen zum inneren Seil 11.2 hinweisendes Gegenstück 15.2 aufweisen. Diese Gegenstücke 15.2 erstrecken sich parallel zur Längsachse L. Sie sind so ausgelegt, dass sie in Längsnuten 15.1 des mittleren Seils 11.2 eingreifen und die erwähnte Relativverschiebung der Seile untereinander ermöglichen.

Bei bevorzugten Ausführungsformen der Erfindung sind die Litzen 12 der Seile jeweils so verseilt, dass mindestens zwei der Seile des Tragmittels 10 unter einer Zugspannung gegensinnige (sich kompensierende) Eigentorsionsmomente aufbauen.

In dem in Fig. 1B gezeigten Beispiel sind die Litzen 12 jedes dieser Seile jeweils parallel (mit gleichem Drehsinn) verseilt, während die Litzen verschiedener Seile 11.1 und 11.2 mit entgegengesetztem Drehsinn verseilt sind.

Die Verbindungselemente 15.1, 15.2 können Bestandteil eines Mantels 13 des jeweiligen Seils 11.1 - 11.3 sein. Sie können in diesem Fall in einem einzigen Herstellungsschritt (mit Extrusion oder Vulkanisieren je nach Material) zusammen mit dem Mantel 13 am jeweiligen Seil befestigt werden.

Vorteilhafterweise kann jedes Seil 11.1 - 11.3 einzeln mit jeweils demselben Werkzeug hergestellt werden.

Anschliessend können mehre Seile zusammengesetzt werden, indem jeweils komplementäre Verbindungselemente 15.1, 15.2 ineinander gesteckt werden (Click-Sheat Verbindung genannt). Anstatt die Verbindungselemente durch Stecken miteinander zu verbinden, können die Verbindungselemente auch so ausgelegt sein, dass man das Gegenstück 15.2 in die Längsnut 15.1 hineinschiebt.

Ein Optimierungsparameter ist der Reibwert zwischen den komplementären Verbindungselementen 15.1, 15.2. Durch Optimierung des Reibwerts kann die Scherspannungen in den Verbindungselementen 15 bei Relativbewegungen der Seile zu vermieden oder wenigstens minimiert werden.

Weiterhin ist es möglich, die einzelnen Verbindungselemente 15 mit einer mechanischen Verstärkung auszustatten.

Besonders bevorzugt ist die Verwendung von Tragmitteln 10 mit Kunstfaserseilen. Besonders geeignet sind metallische, synthetische und/oder organische Litzen 12, oder eine Kombination der genannten Materialien.

Vorzugsweise handelt es sich um Seile 11.1 - 11.3, die durch zwei- oder mehrstufiges Verdrehen von Litzen 12 hergestellt sind. In den Figuren 1A bis 2B sind Seile 11.1 - 11.3 gezeigt, die drei Lagen 12.2, 12.3, 12.4 mit Litzen und eine zentrale Litze 12.1 umfassen. Dies ist aber nur ein Beispiel für den Aufbau der Seile 11.1 - 11.3.

In den Seilen 11.1 - 11.3 können zum Beispiel Seilgarne aus Aramidfasern miteinander verseilt sein.

Wie in den Figuren zu erkennen, ist der gesamte Aussenumfang der Seile 11.1 - 11.3 von einem Seilmantel 13 aus Kunststoffmaterial umhüllt. Der Seilmantel 13 kann synthetische und/oder organische Materialien umfassen. Die folgenden Materialien sind besonders als Seilmantel geeignet: Gummi, Polyurethan, Polyolefin, Polyvinylchlorid oder Polyamid. Das jeweils elastisch verformbare Kunststoffmaterial ist vorzugsweise auf die Seile 11.1 - 11.3 aufgespritzt bzw. extrudiert und anschliessend darauf verdichtet. Dadurch dringt das Seilmantelmaterial von aussen in alle Zwischenräume zwischen den Litzen 12 am Aussenumfang ein und füllt diese aus. Die damit geschaffene Bindung des Seilmantels 13 an die Litzen 12 ist so fest, dass lediglich geringe Relativbewegungen zwischen den Litzen 12 der Seile 11.1 - 11.3 und dem Seilmantel 13 auftreten. An dem Seilmantel befestigt oder in den Seilmantel 13 integriert ist entweder eine Längsnut 15.1 oder ein Gegenstück 15.2, das so ausgelegt ist, dass es in die Längsnut 15.1 eingesteckt oder eingeschoben werden kann.

Vorzugsweise sind die Verbindungselemente 15 innig mit dem Seilmantel 13 verbunden, wie in den Figuren gezeigt.

Vorzugsweise sind Verbindungselemente 15 länglich ausgeführt und erstreckt sich in Längsrichtung L entlang des Seilmantels 13. Es ist aber auch denkbar, dass sich die Verbindungselemente 15 nur jeweils über gewisse Längenabschnitte des Tragmittels 10 erstrecken. Zwischen diesen Längenabschnitten befinden sich dann vorzugsweise Längenabschnitte in denen kein Steg 14 zwischen benachbarten Seilen vorhanden ist.

Gemäss einer weiteren Ausführungsform können im Bereich der Verbindungselemente 15 kurze Fiberstücke (z.B. Glasfasern, Aramidfasern oder dergleichen) oder eine gewebte Matte eingebettet sein, die als Verstärkung dienen.

Die in den Figuren gezeigten Tragmittel 10 sind besonderes zum Antrieb durch eine Seilscheibe geeignet, wobei die Kraftübertragung zwischen der Seilscheibe und dem Tragmittel 10 im Wesentlichen per Reibschluss erfolgt.

Die erfindungsgemässen Ausführungsformen erlauben es Stegbrüche oder Schwächungen im Stegbereich zu vermeiden indem Scherbewegungen in Längsverschiebungen parallel zur Längsachse L umgesetzt werden. Dadurch kann eine Beschädigung des Stegbereichs und gleichzeitig der Abrieb an konventionellen Tragmitteln mit zwei oder mehreren Seilen reduziert werden.

Die Zwillings-, Drillings-, oder Mehrfachseile gemäss der Erfindung können problemlos Laufradiusunterschiede an Treibscheiben kompensieren, wenn sich die Seile des Tragmittels 10 an einer Treibscheibe längs Kreisbahnen mit unterschiedlichem Radius und deshalb mit unterschiedlicher Geschwindigkeit am Umfang der Treibscheibe bewegen.

## Patentansprüche

1. Tragmittel (10) zur Verwendung in einer Aufzugsanlage, wobei das Tragmittel (10) mindestens zwei Seile (11.1, 11.2, 11.3) aus mehreren Litzen (12) aufweist, die zur Kraftaufnahme in Längsrichtung (L) ausgelegt sind, wobei die Seile (11.1, 11.2, 11.3) entlang der Längsrichtung (L) des Tragmittels (10) mit einem Abstand (A1) zueinander angeordnet sind, **dadurch gekennzeichnet, dass** die Seile (11.1, 11.2, 11.3) mittels je eines Seilmantels (13) verbunden sind, die einen Steg (14) zwischen den beiden Seilen (11.1, 11.2, 11.3) bilden, und dass im Bereich des Stegs (14) Verbindungsmittel (15) vorgesehen sind, wobei die Verbindungsmittel (15) so ausgelegt sind, dass sie eine geführte Relativbewegung der Seile (11.1, 11.2, 11.3) zueinander in Längsrichtung (L) ermöglichen.

2. Tragmittel (10) nach Anspruch 1, **dadurch gekennzeichnet, dass** die Verbindungsmittel (15) ein Führungselement (15.1) umfassen, um die geführte Relativbewegung der Seile (11.1, 11.2, 11.3) zueinander in Längsrichtung (L) zu ermöglichen.

3. Tragmittel (10) nach Anspruch 1 oder 2, **dadurch gekennzeichnet, dass** die Litzen (12) des einen Seils (11.1) und die Litzen (12) des anderen Seiles (11.2) mit gegenläufigen Eigentorsionsmomenten beaufschlagt sind, um eine Verdrehen des Tragmittels entlang der Längsachse (L) zu vermeiden.

4. Tragmittel (10) nach Anspruch 1 oder 2, **dadurch gekennzeichnet, dass** der Seilmantel (13) synthetische und/oder organische Materialien umfasst.

5. Tragmittel (10) nach Anspruch 1 oder 2, **dadurch gekennzeichnet, dass** die Litzen (12) metallische, synthetische und/oder organische Materialien umfassen.

6. Tragmittel (10) nach Anspruch 1 oder 2, **dadurch gekennzeichnet, dass** die Verbindungsmittel (15) in Form einer formschlüssigen Verbindung, vorzugsweise einer Feder-Nut-Verbindung (15.2, 15.1), realisiert sind.

7. Tragmittel (10) nach Anspruch 1 oder 2, **dadurch gekennzeichnet, dass** die Verbindungsmittel (10) eine Längsnut (15.1) die sich an einem der Seile (11.1) in Längsrichtung (L) erstreckt und ein in diese Längsnut (15.1) eingreifendes Gegenstück (15.2) an dem anderen Seil (11.2) umfassen.

8. Tragmittel (10) nach Anspruch 1, 2, 6 oder 7, **dadurch gekennzeichnet, dass** die Verbindungsmittel (15) steckbar ausgeführt sind.

9. Tragmittel (10) nach Anspruch 1, 2, 6 oder 7, **dadurch gekennzeichnet, dass** die Verbindungsmittel (15) als integraler Bestandteil des Seilmantels (13) ausgeführt sind.

## Claims

1. Support means (10) for use in a lift installation, wherein the support means (10) comprises at least two cables (11.1, 11.2, 11.3) of several strands (12), which are designed for acceptance of force in longitudinal direction (L), wherein the cables (11.1, 11.2, 11.3) are arranged along the longitudinal direction (L) of the support means (10) at a spacing (A1) from one another, **characterised in that** the cables (11.1, 11.2, 11.3) are each connected by means of a respective cable casing (13), which casings form a web (14) between the two cables (11.1, 11.2, 11.3), and that connecting means (15) are provided in the region of the web (14), wherein the connecting means (15) are so designed that they enable a guided relative movement of the cables (11.1, 11.2, 11.3) with respect to one another in longitudinal direction (L).

2. Support means (10) according to claim 1, **characterised in that** the connecting means (15) comprise a guide element (15.1) to enable the guided relative movement of the cables (11.1, 11.2, 11.3) with respect to one another in longitudinal direction (L).

3. Support means (10) according to claim 1 or 2, **characterised in that** the strands (12) of one cable (11.1) and the strands (12) of the other cable (11.2) are loaded by inherent torsional moments of opposite sense so as to avoid twisting of the support means along the longitudinal axis (L).

4. Support means (10) according to claim 1 or 2, **characterised in that** the cable casing (13) comprises synthetic and/or organic materials.

5. Support means (10) according to claim 1 or 2, **characterised in that** the strands (12) comprise metallic, synthetic and/or organic materials.

6. Support means (10) according to claim 1 or 2, **characterised in that** the connecting means (15) are realised in the form of a mechanically positive connection, preferably a key-and-groove connection (15.2, 15.1).

7. Support means (10) according to claim 1 or 2, **characterised in that** the support means (10) comprise a longitudinal groove (15.1) which extends at one of the cables (11.1) in longitudinal direction (L) and a counter-member (15.2), which engages in this longitudinal groove (15.1), at the other cable (11.2).

8. Support means (10) according to claim 1, 2, 6 or 7, **characterised in that** the connecting means (15) are of pluggable construction.

9. Support means (20) according to claim 1, 2, 6 or 7, **characterised in that** the connecting means (15) are constructed as an integral component of the cable casing (13).

## Revendications

1. Élément porteur (10) destiné à être utilisé dans une installation d'ascenseur, auquel cas l'élément porteur (10) présente au moins deux câbles (11.1, 11.2, 11.3) composés de plusieurs torons (12), lesquels sont prévus pour la réception des forces dans le sens longitudinal (L), auquel cas les câbles (11.1, 11.2, 11.3) sont placés à une distance (A1) l'un de l'autre le long du sens longitudinal (L) de l'élément porteur (10), **caractérisé en ce que** les câbles (11.1, 11.2, 11.3) sont reliés chacun à l'aide d'une gaine de câble (13), lesquelles forment une traverse (14) entre les deux câbles (11.1, 11.2, 11.3), et **en ce que** l'on prévoit dans le secteur de la traverse (14) des moyens de liaison (15), auquel cas les moyens de liaison (15) sont étalés de telle façon qu'ils permettent un mouvement relatif guidé des câbles (11.1, 11.2, 11.3) l'un vers l'autre dans le sens longitudinal (L).

2. Élément porteur (10) selon la revendication 1, **caractérisé en ce que** les moyens de liaison (15) comportent un élément de guidage (15.1) afin de permettre le mouvement relatif guidé des câbles (11.1, 11.2, 11.3) l'un vers l'autre dans le sens longitudinal (L).

3. Élément porteur (10) selon la revendication 1 ou 2, **caractérisé en ce que** les torons (12) d'un câble (11.) et les torons (12) de l'autre câble (11.2) sont alimentés par des moments de torsion propre opposés afin d'éviter une torsion de l'élément porteur le long de l'axe longitudinal (L).

4. Élément porteur (10) selon la revendication 1 ou 2, **caractérisé en ce que** la gaine du câble (13) se compose de matériaux synthétiques et/ou organiques.

5. Élément porteur (10) selon la revendication 1 ou 2, **caractérisé en ce que** les torons (12) contiennent des matériaux métalliques, synthétiques et/ou organiques.

6. Élément porteur (10) selon la revendication 1 ou 2, **caractérisé en ce que** les moyens de liaison (15) sont réalisés en forme d'un assemblage par liaison de forme, de préférence en forme d'un assemblage à languette et rainure (15.2, 15.1).

7. Élément porteur (10) selon la revendication 1 ou 2, **caractérisé en ce que** les moyens de liaison (10) comportent - une rainure longitudinale (15.1) qui s'étend au niveau d'un des câbles (11.1) dans le sens longitudinal (L) et - un pendant (15.2) entrant en prise avec cette rainure longitudinale (15.1) au niveau de l'autre câble (11.2).

8. Élément porteur (10) selon la revendication 1, 2, 6 ou 7, **caractérisé en ce que** les moyens de liaison (15) sont exécutés de sorte à être enfichables.

9. Élément porteur (10) selon la revendication 1, 2, 6 ou 7, **caractérisé en ce que** les moyens de liaison (15) sont exécutés en tant qu'élément intégré de la gaine du câble (13).
